# EUROPÄISCHE PATENTANMELDUNG

(11) **EP 1 014 092 A2**
(43) Veröffentlichungstag der Anmeldung: **28.06.2000**
(21) Anmeldenummer: 99440337.6
(22) Anmeldetag: 02.12.1999
(51) Int. Cl.: G01P 3/64

(54) **Verfahren und Vorrichtung zur fahrzeuginternen Ermittlung der Geschwindigkeit eines Landfahrzeuges**

(30) Priorität: 23.12.1998 DE 19859646
(71) Anmelder: ALCATEL, 75008 Paris (FR)
(72) Erfinder: Beier, Wolfgang, 71263 Weil der Stadt (DE)
(74) Vertreter: Brose, Gerhard, Dipl.-Ing.

(57) **Zusammenfassung**

Die Erfindung betrifft ein Verfahren und eine Vorrichtung zur fahrzeuginternen Ermittlung der Geschwindigkeit eines Landfahrzeuges. Um unbefugte Manipulationen der Geschwindigkeitsmessung zu erschweren, ist vorgesehen, daß der zeitliche Abstand gleichartiger Vibrationspiks im wesentlichen vertikaler Vibrationen in Fahrtrichtung hintereinander angeordneter Bauteile, insbesondere Radachsen (2.1, 2.2, 2.3, 2.4), auf welche die gleichen Unebenheiten (7.1; 7.2) der Fahroberfläche, insbesondere Straße (8) oder Schiene, wirken, als Maß der Geschwindigkeit ermittelt wird.

## Beschreibung

Die Erfindung betrifft ein Verfahren und eine Vorrichtung zur fahrzeuginternen Ermittlung der Geschwindigkeit eines Landfahrzeuges gemäß den Oberbegriffen der Ansprüche 1 und 2. Die Messung der Geschwindigkeit von Straßen- und Schienenfahrzeugen ist für viele Anwendungen und Zwecke von herausragender Bedeutung. Insbesondere auf dem neuen Markt der automatischen Erfassung von Straßenbenutzungsgebühren kommt die Forderung nach Geschwindigkeitssensoren auf, die nicht manipuliert werden können. Unter Manipulation sollen hier nicht mechanisch nachweisbare Angriffe, wie das Brechen von Plomben, das gewaltsame Aufbrechen von verschlossenen Gehäusen oder das Entfernen von Anlagen aus dem Fahrzeug betrachtet werden. Das sind Manipulationen, die eine andere strafrechtliche Ebene ansprechen. Hier sind die "weichen" Manipulationen gemeint, wie das Abdecken von Antennen, das Lösen von Kabelverbindungen oder das Abschrauben von Pulsgebern am Getriebe, die eher rückgängig gemacht werden können, ohne daß ein Nachweis möglich ist.

Aus der Flugnavigation sind Geschwindigkeitsmeßverfahren bekannt, bei denen gyrometrisch verifizierte Beschleunigungssensoren verwendet werden, wobei das Integral über die Zeit die Geschwindigkeit ergibt. Diese Geräte können zwar manipulationssicher ausgeführt werden; sie sind jedoch extrem teuer.

Der Erfindung liegt die Aufgabe zugrunde, ein Verfahren und eine Vorrichtung der oben genannten Gattung anzugeben, welche sich durch Manipulationssicherheit und dennoch preisgünstigem Aufbau auszeichnen.

Erfindungsgemäß wird die Aufgabe durch die kennzeichnenden Merkmale des Anspruchs 1 gelöst. Dabei wird zum einen die Tatsache ausgenutzt, daß Landfahrzeuge in allen drei räumlichen Achsen, also auch der Vertikalachse, dem Verlauf der Fahroberfläche folgen und zum anderen, daß sich durch Unebenheiten hervorgerufene Vibrationen an verschiedenen Meßstellen wiederholen. Als Meßstellen eignen sich besonders die Radachsen, da diese nicht starr miteinander verbunden sind, sondern durch Stoßdämpfer im wesentlichen unabhängig voneinander auf Unebenheiten der Fahroberfläche reagieren. Üblicherweise benutzen die Räder aller Achsen sehr genau dieselbe Spur auf der Straße, so daß das hintere Rad etwas später als das vordere über dieselben Unebenheiten fährt und sich dadurch zeitlich versetzte Vibrationen ergeben. Der zeitliche Abstand gleichartiger Vibrationspiks hängt von der Geschwindigkeit und dem Abstand der Achsen ab. Da der Achsabstand manipulationssicher als konstant angenommen werden kann, ist dieser zeitliche Abstand ein Maß für die Geschwindigkeit des Fahrzeuges.

Eine Vorrichtung zur Ermittlung der Geschwindigkeit umfaßt gemäß Anspruch 2 mindestens einen Vibrationssensor und einen Rechner. Vorzugsweise ist ein Vibrationssensor vorgesehen, der an einer fest mit dem Fahrzeug verbundenen, manipulationssicheren Einheit angeordnet ist. Durch die Übertragung der Erschütterungen oder Vibrationen an den Meßort ergeben sich immer dann Vibrationspiks, wenn Vorderachsenräder oder Hinterachsenräder Unebenheiten überfahren. Es ist auch möglich, an allen Radachsen des Fahrzeugs Vibrationssensoren anzuordnen. Die Ausgangssignale des Vibrationssensors oder der Vibrationssensoren werden dem Rechner zugeführt, der daraus das zeitliche Vibrationsspektrum und letztlich den Abstand gleichartiges Vibrationspiks ermittelt. Bei drei Radachsen ergeben sich somit mehrere Möglichkeiten, die Geschwindigkeit zu ermitteln. Zugrunde gelegt werden kann der Abstand zwischen dem vorderen und dem mittleren, dem mittleren und dem hinteren sowie dem vorderen und dem hinteren Vibrationssensor. Somit sind drei Meßwertermittlungen pro Meßzyklus bzw. Autokorrelationsfunktion möglich, wodurch sich aus einer Mittelwertbildung eine sehr genaue Geschwindigkeitsmessung ergibt. Die Anordnung des Vibrationssensors oder der Vibrationssensoren und/oder dessen oder deren Empfindlichkeit kann dabei derart getroffen sein, daß die Höhe der Vibrationspiks bei Überfahren derselben Fahrbahnunebenheit für alle Radachsen etwa gleich ist. Eine Eichung der Nullage des Vibrationssensors oder der Vibrationssensoren ist dabei nicht notwendig erforderlich, so daß die Sensoren sehr preisgünstig sind.

Zusätzlich kann der Rechner gemäß Anspruch 3 mit einem Meßgerät zur Feststellung einer Kurvenfahrt, insbesondere einem einfachen Kreiselmeßgerät, verbunden sein. Auf diese Weise können Abweichungen der Höhe der Vibrationspiks, die sich bei Kurvenfahrten dadurch ergeben, daß die Reifenspuren nicht genau übereinanderliegen, in die Rechnung mit einbezogen werden.

Gemäß Anspruch 4 ist vorgesehen, daß der Rechner bereits aus der Höhe der Vibrationspiks quasi einen Schätzwert der Geschwindigkeit ableitet. Dieser Schätzwert kann z.B. als Plausibilitätsbewertung der eigentlichen Geschwindigkeitsmessung dienen. Da die Höhe der Vibrationspiks jedoch nicht nur von der Geschwindigkeit, sondern auch von diversen anderen Parametern, u. a. der Höhe bzw. der Art der Unebenheit, abhängt, wird dieser Schätzwert jedoch nur einen ersten Anhaltspunkt für einen plausiblen Geschwindigkeitsbereich liefern können.

Die Ansprüche 5 und 6 charakterisieren Weiterbildungen der Erfindung, die eine Stützung der Geschwindigkeitsmessung durch ein zusätzliches unabhängiges Meßverfahren gestatten. Dabei wird die mittels eines Mikrophones abgeschätzte Motordrehzahl beziehungsweise der jeweilige Getriebegang für die unabhängige Geschwindigkeitsermittlung benutzt.

Ein besonderer Vorteil der erfindungsgemäßen Geschwindigkeitsmessung ergibt sich durch die zusätzliche Möglichkeit, auf einfache und manipulationssichere Weise festzustellen, wieviele Radachsen ein Fahrzeug gerade aktiv benutzt. Dazu wird gemäß Anspruch 7 festgestellt, wieviele gleichartige Vibrationspiks pro Meßzyklus, d.h. Autokorrelationsfunktion vorhanden sind. Insbesondere LKWs können teilweise einzelne Achsen einziehen und Anhänger mit verschiedenen Achszahlen mit sich führen. Die Feststellbarkeit der aktiven Radachsen gestattet somit auf einfache und manipulationssichere Weise, die jeweilige Fahrzeugkonfiguaration streckenabhängig aufzuzeichnen und beispielsweise bei der Abrechnung von Straßenbenutzungsgebühren mit zu berücksichtigen.

Die Ansprüche 8 und 9 betreffen Maßnahmen zur Eliminierung von Fehlerquellen bei der Geschwindigkeitsermittlung.

Gemäß Anspruch 8 ist eine Ausfilterung derjenigen Vibrationspiks vorgesehen, die durch gleichmäßige Unebenheiten, insbesondere Dehnungsspalten in Betonfahrbahnen, verursacht sind. Falls derartige Unebenheiten so dicht aufeinander folgen, daß es möglich ist, daß die vordere Radachse die nächste Unebenheit passiert bevor die letzte Radachse die voranliegende überfahren hat, könnte sonst der Rechner u. U. nicht mehr entscheiden, zu welchem Meßzyklus die Vibrationspiks gehören. Es könnte sich quasi eine Überlagerung der Autokorrelationsfunktionen ergeben. Da die durch äquidistante Unebenheiten verursachten Vibrationspiks jedoch überwiegend eine hochfrequente Charakteristik aufweisen, lassen sich diese durch entsprechende Filter relativ leicht von vornherein aus dem Vibrationsspektrum ausfiltern oder aber über die Differenz von zwei verschieden gefilterten Autokorrelationsfunktionen erkennen.

Des weiteren können gemäß Anspruch 9 Rausch-Filter zur Eliminierung fahrzeugspezifischer Eigenschwingungen vorgesehen sein. Die sich aus der Zeitkonstanten der Stoßdämpfung ergebenden Eigenschwingungen der einzelnen Radachsen können durch einmalige Messung oder entsprechende konstruktive Maßnahmen ermittelt oder festgelegt werden und gegebenenfalls geschwindigkeitsabhängig von dem Rechner berücksichtigt werden.

Zur Eichung der Meßvorrichtung können zum Beispiel kurzzeitig Signale von GPS-Satelliten (Global Positioning System) herangezogen werden. Damit entfällt eine Eichung der Konfigurierung bei der Installation.

Die Erfindung wird nachfolgend anhand eines schematisch dargestellten Ausführungsbeispiels näher erläutern.

Dargestellt ist ein LKW 1 mit vier Radachsen 2.1, 2.2, 2.3 und 2.4. An den vier Radachsen 2.1, 2.2, 2.3 und 2.4 sind jeweils Vibrationssensoren 3.1, 3.2, 3.3 und 3.4 manipulationssicher verplompt. Über Ausgangssignalleitungen 4.1, 4.2, 4.3 und 4.4, die beipielsweise mit dem Kabelbaum 5 des LKWs 1 verwoben sein können, sind die Vibrationssensoren 3.1, 3.2, 3.3 und 3.4 mit einem Rechner 6 verbunden. Es ist ersichtlich, daß der LKW 1 gerade eine Unebenheit 7.1 der Fahrbahn 8 passiert hat, während eine weitere Unebenheit 7.2 in Fahrtrichtung vorausliegt. Die Unebenheit 7.1 hat an den Radachsen 2.1, 2.2 und 2.4 zeitlich nacheinander durch deren Vibrationssensoren 3.1, 3.2 und 3.4 erfaßte Vibrationen ausgelöst. Die Radachse 2.3 ist in dem Ausführungsbeispiel eingezogen und hat somit kein Vibrations-Ausgangssignal geliefert. Der Rechner 4 verarbeitet die Vibrationssignale, indem zunächst das Vibrationsspektrum ermittelt wird. Die Amplitute der Vibrationspiks kann von dem Rechner als grober Schätzwert für die noch zu ermittelnde Geschwindigkeit gespeichert werden. Hernach berechnet der Rechner 6 einen Autokorrelationskoeffizienten über die Zeit. Es wird also festgestellt, ob und mit welchem zeitlichen Abstand sich das Spektrum wiederholt. Der Abstand gleichartiger Vibrationspiks ist umgekehrt proportional der zu ermittelnden Geschwindigkeit. Als Proportionalitätsfaktor geht lediglich der Abstand zwischen den Radachsen - hier der Abstand zwischen den Radachsen 2.1 und 2.2 bzw. 2.1 und 2.4 bzw. 2.2 und 2.4 - in das Meßergebnis ein. Da die Radachsenabstände jedoch üblicherweise konstant und auch nicht manipulierbar sind, kann die entsprechende Fahrzeugkonfiguration im Rechner 6 fest einprogrammiert sein.

Eine weitere Erhöhung der Manipulationssicherheit ist durch die Zusammenziehung der Vibrationssensoren 3.1 bis 3.4 auf einen einzigen Meßort möglich. Es verbleibt dann ein einziger Vibrationssensor, der auf Vibrationen durch unebenheitsbedingte Erschütterungen aller Radachsen 2.1 bis 2.4 reagiert.

Wie oben erläutert, sind bei dem Ausführungsbeispiel drei Radachsenabstände und damit drei Autokorrelationskoeffizienten zur Berechnung der Geschwindigkeit verwendbar. Wenn die eingezogene Radachse 2.3 aktiv wird, d.h., wenn die zugehörigen Räder die Fahrbahn 8 berühren, erhöht sich die Anzahl gleichartiger Vibrationspiks pro Unebenheit 7.1 bzw. 7.2, respektive pro Meßzyklus beziehungsweise pro Autokorrelationsfunktion auf vier. Dadurch ergibt sich die Möglichkeit, festzustellen, wieviel Radachsen 2.1, 2.2, 2.3, 2.4 eines Fahrzeugs, insbesondere eines LKWs 1, gerade aktiv sind. Die Geschwindigkeit und gegebenenfalls die Anzahl der aktiven Radachsen können für verschiedene Anwendungen, beispielsweise als Teilkompo-nenten für ein Straßenbenutzungsgebühren-Erfassungssystem, benutzt werden.

Die Erfindung beschränkt sich nicht auf das vorstehend angegebene Ausführungsbeispiel. Vielmehr ist eine Anzahl von Varianten denkbar, welche auch bei grundsätzlich andersgearteter Ausführung von den Merkmalen der Erfindung Gebrauch machen.

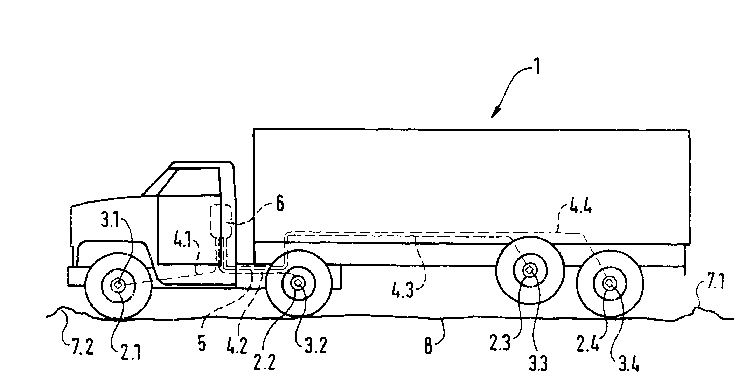

## Patentansprüche

1. Verfahren zur fahrzeuginternen Ermittlung der Geschwindigkeit eines Landfahrzeuges, dadurch gekennzeichnet, daß der zeitliche Abstand gleichartiger Vibrationspiks im wesentlichen vertikaler Vibrationen in Fahrtrichtung hintereinander angeordneter Bauteile, insbesondere Radachsen (2.1, 2.2, 2.3, 2.4), auf welche die gleichen Unebenheiten 7.1; 7.2) der Fahroberfläche, insbesondere Straße (8) oder Schiene, wirken, als Maß der Geschwindigkeit ermittelt wird.

2. Vorrichtung zur Durchführung des Verfahrens nach Anspruch 1, dadurch gekennzeichnet, daß mindestens ein Vibrationssensor (3.1, 3.2, 3.3, 3.4) vorgesehen ist, dessen Ausgangssignale einen Rechner (6) beaufschlagen, welcher das zeitliche Vibrationsspektrum und den Abstand gleichartiger Vibrationspiks errechnet.

3. Vorrichtung nach Anspruch 2, dadurch gekennzeichnet, daß ein Meßgerät zur Feststellung einer Kurvenfahrt, insbesondere ein Kreisel-Meßgerät, mit dem Rechner (6) verbunden ist.

4. Vorrichtung nach Anspruch 2 oder 3, dadurch gekennzeichnet, daß der Rechner (6) aus der Höhe der Vibrationspiks einen "Schätzwert" der Geschwindigkeit ableitet.

5. Vorrichtung nach einem der Ansprüche 2 bis 4, dadurch gekennzeichnet, daß ein Mikrophon zur Messung der Motordrehzahl mit dem Rechner (6) verbunden ist.

6. Vorrichtung nach einem der Ansprüche 2 bis 5, dadurch gekennzeichnet, daß Mittel zur Feststellung des Getriebeganges mit dem Rechner (6) verbunden sind.

7. Vorrichtung nach einem der Ansprüche 2 bis 6, dadurch gekennzeichnet, daß der Rechner (6) aus der Anzahl gleichartiger Vibrationspiks pro Meßzyklus die Anzahl der aktiven Radachsen (2.1, 2.2, 2.4) ableitet.

8. Vorrichtung nach einem der Ansprüche 2 bis 7, dadurch gekennzeichnet, daß der Rechner (6) Vibrationspik-Filter zur Eliminierung von Vibrationspiks aus dem Vibrationsspektrum aufweist, welche durch äquvidistante Unebenheiten, insbesondere Dehnungsspalten in Betonfahrbahnen, verursacht sind.

9. Vorrichtung nach einem der Ansprüche 2 bis 8, dadurch gekennzeichnet, daß der Rechner (6) Rausch-Filter zur Eliminierung fahrzeugspezifischer Eigenschwingungen aus dem Vibrationsspektrum aufweist.
